# EUROPEAN PATENT SPECIFICATION

(11) **EP 3 347 652 B1**
(45) Date of publication and mention of the grant of the patent: **17.02.2021**
(21) Application number: 16778086.5
(22) Date of filing: 02.09.2016
(51) Int. Cl.: F24F 11/62, H02J 13/00, F25B 49/02, F24F 11/30, F24F 110/10, H02J 3/14

(54) **THERMAL LOAD WITH IMPROVED RESPONSIVENESS**
THERMISCHE LAST MIT VERBESSERTER REAKTIONSFÄHIGKEIT
CHARGE THERMIQUE À SENSIBILITÉ AMÉLIORÉE

(30) Priority: 08.09.2015 GB 201515911
(43) Date of publication of application: 18.07.2018
(73) Proprietor: Origami Energy Limited, Cambridge CB4 0GZ (GB)
(72) Inventor: LELUSZ, Jerzy, Godalming Surrey GU7 1LQ (GB)
(74) Representative: Yip, Matthew Wing Yu
(86) International application number: PCT/GB2016/052714
(87) International publication number: WO 2017/042542

(56) References cited:
- EP-A1- 1 074 797
- GB-A- 2 180 673
- JP-A- H09 287 501
- US-A- 4 614 089

## Description

### Field of the Invention

Responsive loads are described, particularly refrigeration (including air-conditioning) loads, and methods by which they may be controlled to take advantage of fluctuations in energy availability and/or to facilitate operation of an electrical grid or network.

### Background to the Invention

Typically, a refrigeration load, e.g. a compressor within a refrigerator or air conditioning unit, operates in an ON/OFF cycle to keep temperature within an allowable range between a maximum temperature and a minimum temperature. A refrigerator or refrigeration plant or air-con unit or building or building complex may have many such compressors. When a compressor is in an OFF state and the refrigerator temperature (monitored by a thermometer) rises and approaches the maximum operating temperature, the compressor is switched ON to reduce the temperature. When the compressor is in an ON state and the temperature falls and approaches the minimum operating temperature, the compressor is switched OFF to allow the temperature to rise.

Compressors consume electric power. It is known that the cost of power may depend on the demand and supply of power which can vary with time, for example during different times of a day. It is also a problem that electricity generators have to provide power capacity to meet peak demand, and provision of capacity is expensive. Subject to such power pricing schemes or constraints on peak available power, it may be advantageous to provide a responsive load, such as a refrigerator, in which it is possible manipulate the ON/OFF cycles of compressors, in order to enhance synchronisation between their ON/OFF behaviour and temporal variations in energy availability. For example, in the case of a peak in the supply of energy and hence the availability of less costly energy, the temperature of a refrigerator may be driven down by turning on the compressors, as long as the refrigerator is not cooled to below its minimum operating temperature. Similarly, in the case of a peak in the demand of energy, the temperature of a refrigerator may be allowed to rise by turning off the compressors as long as the refrigerator does not warm up above its maximum operating temperature.

Therefore, refrigeration loads with responsive capabilities are preferred. Peaks and troughs in power supply or demand may or may not be predicted or well known in advance. In the case where prior knowledge is available, it may be advantageous, for instance, to drive the temperature down ahead of a predicted trough in energy supply or a predicted peak in energy demand, during which power cost may be higher. Similarly, it may be advantageous to let the temperature rise ahead of a predicted peak in supply of energy or a predicted trough in energy demand, during which energy price may be lower.

A responsive load such as a refrigerator containing one or more refrigeration loads such as compressors may be controlled by a central server. Each individual compressor may be controlled by means of a local control loop or local controller, and may be monitored by a local temperature sensor (e.g. a thermometer or thermostat). In addition, one or more routers may be present in the system, to communicate with the refrigeration loads and the server; the server may issue instructions, based on high-level aims, and override the local control loop(s); for instance, the router(s) may receive instructions from the server and cause the local control loop(s) to respond. In an embodiment, local controllers may communicate via the router(s) to coordinate their behaviour on a peer-to-peer basis.

Aspects of a power distribution control system including responsive loads are discussed in previous patent applications GB 1414724.3 and PCT/GB2014/052542.

In the course of operation, a typical compressor in a refrigerator has "dead times" during which it is unresponsive and cannot be turned on or off. For example, once a compressor is powered off, it may not be possible to turn it on for a period of time immediately afterwards. This is, for example, because of the need for the pressure in the system to settle down, in order to avoid damage to the compressor or the system or otherwise. Similarly, once a compressor is turned on, it may not be possible to turn it off for a period of time immediately afterwards. Other thermal loads such as a combined heat and power (CHP) plant or a heat pump can similarly experience non-responsive dead times (typically immediately after turning on or turning off).

US 4614089 A discloses a controlled refrigeration system that includes a plurality of refrigerant compressors fed from a common suction manifold, which delivers refrigerant gas under pressure to a common head pressure manifold.

### Summary of the Invention

In accordance with the present invention, there are provided a method for providing a responsive load that may be required to respond to a peak or trough in electric power supply as recited by claim 1, a responsive load system that may be required to respond to a peak or trough in electric power supply as recited by claim 11, and a method of providing a responsive load as recited by claim 13.

According to an aspect of the present invention, a method of providing a responsive load system according to claim 1 is provided that comprises: providing first and second thermal loads, each having a dead time during which it is not responsive; controlling the thermal loads by means of local control loops in response to at least one local thermostat; storing, at a server, information relating to the dead times for the thermal loads; and enabling the server to intervene in the operation of the responsive load and override the local control loop of the first thermal load so as to advance or delay the dead time of the first thermal load and thereby avoid, reduce or mitigate overlapping dead times. In one aspect, enabling the server to override the local control loop causes the first thermal load to advance or delay the dead time of the first thermal load so that it does not entirely coincide with the dead time of the second thermal load. In another aspect, the step intervening may comprise causing a battery to provide power to the load or to draw power from a source supplying the load selectively during overlapping dead times.

According to a second aspect of the invention, a responsive load system according to claim 11 is provided comprising a plurality of thermal loads, each having a dead time during which it is not responsive; means for controlling the plurality of thermal loads by means of local control loops in response to at least one local thermostat; a server for storing information relating to the dead times for the plurality of thermal loads; and means for enabling the server to intervene in the operation of the responsive load and override the local control loop of a first of the plurality of thermal loads so as to advance or delay the dead time of the first thermal load and thereby avoid, reduce or mitigate overlapping dead times. In one aspect, the means for enabling the server to intervene in the operation of the responsive load and override the local control loop causes the first thermal load to advance or delay the dead time of the first thermal load so that it does not entirely coincide with the dead time of a second of the plurality of thermal loads. In another aspect, the means for avoiding, reducing or mitigating overlapping dead times may comprise a battery under control of the server.

According to a third aspect of the invention, a method of providing a responsive load system according to claim 13 is provided. In another aspect, the step of avoiding, reducing or mitigating may comprise switching a battery to provide power to the load or to draw power from a source supplying the load between times t1 to t2.

The parameters in relation to this so-called dead time (for example its duration) that takes place immediately after turning a thermal load on or off, are known to the server controlling the responsive load and the thermal loads. They may be programmed into the server, or the server may be provided with means for discovering them. For example, if the dead time for a compressor is not already known, it may be detected or measured, and subsequently stored at the server. In most cases, the dead time is constant in duration for each respective compressor, but it may be necessary from time to time to detect, measure and update the dead time.

In view of the presence of dead times in the ON/OFF cycle of a typical thermal load in normal operation, and in view of variations in energy cost in time, it is advantageous for a responsive load, such as a refrigerator, to remain responsive ahead of predicted energy supply peaks or troughs. In other words, it is advantageous to make sure some or all of its compressors are not within their respective dead times when the refrigerator is required to respond to a peak or trough in electric power supply. Therefore, the ability to manipulate the cyclical ON/OFF behaviour of thermal loads improves overall flexibility of the system. In one aspect, the manipulating can be achieved by delaying or advancing switching on or off one or more compressors such that one or more dead times do not coincide with a time during which the responsive load may be needed. In one aspect, this entails enabling the server to override the local control loop so as to advance or delay the dead time.

In an alternative embodiment, it is possible to fill compressor dead times with short times of battery operation if battery assets are available in the system.

Optionally, especially in the case where the precise times of power supply peaks or troughs are not well known in advance and in the case where there are a plurality of compressors (thermal loads) in the responsive load, it is advantageous to control and coordinate the ON/OFF times of the plurality of thermal loads such that their dead times do not coincide, and some or all of the thermal loads remain responsive at any time or at a specific time. In one embodiment, this can be achieved by staggering the ON/OFF cycles of the thermal loads.

As long as the operating thresholds of the refrigerator (or CHP plant or air conditioner or heat pump or other thermal load) are not exceeded or violated, i.e. the temperature is kept within a range between the pre-determined maximum and minimum values, the presently disclosed system of a responsive load with thermal loads and method of providing such a system can take better advantage of variations in power supply or demand and power cost by allowing improved responsiveness through reducing or eliminating the impact of dead times of thermal loads.

It is noted the system will also work, beyond thermal loads such as refrigerators and CHP plants, for any process or plant that has an in-built energy store, such as a building's thermal capacity, coolant stored in an air conditioner's on-site refrigerant pipework, or hot water in a CHP or other heating plant site. Effectively, the presence of the inherent energy store allows the system to manipulate the ON/OFF times of the assets indirectly, without influencing the outcome of the primary process.

### Brief Description of the Drawings

Fig. 1 illustrates an example of a system comprising a responsive load 100.
Figs. 2a and 2b are exemplary representations of the ON/OFF cycle of a refrigeration load during operation.
Fig. 2c shows an exemplary representation of the ON/OFF behaviour of a refrigeration load along with variations in power supply and temperature.
Figs. 3a and 3b illustrates the ON/OFF cycles 310-314 of three refrigeration loads 110-114 in a responsive load 100.
Fig. 4 illustrates an embodiment in which battery assets are available in the system comprising a responsive load 100.

### Detailed Description of Preferred Embodiments

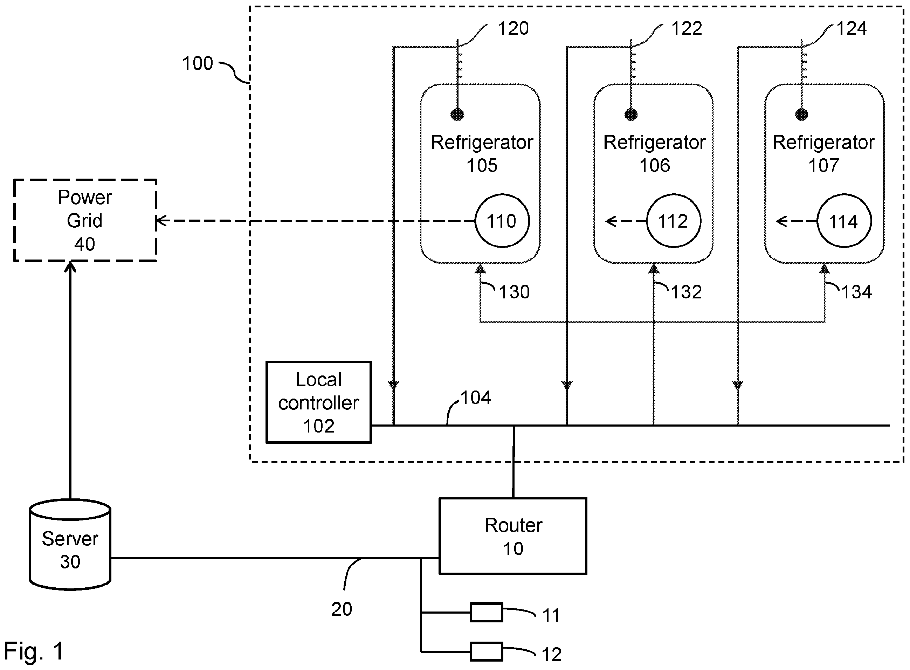

Fig. 1 illustrates an example of a responsive load 100. The responsive load, e.g. a refrigerator bank (or air conditioner or heat pump), comprises a plurality of refrigerators 105-107 (or air conditioner units or heat pumps), each having a compressor 110-114, a temperature sensor or thermostat 120-124, and a local control input 130-134. Each compressor is under control by a local control loop comprising the local controller 102 and local area network 104. The temperature sensors feed their measurements to the local controller 102 via the network 104; the local controller 102 controls the inputs of the compressor 110-114 through the network 104. Note that in a single control loop there may be multiple compressors for a given temperature sensor or multiple temperature sensors for a given compressor. The refrigerators 105-107 are illustrated as being under common control of a local controller, but they may be stand-alone, each under control of its own local controller, with each local controller separately communicating with the server 30 through a respective router. There may be additional refrigerators or refrigerator banks allocated to the server 30 via routers 11 and 12.

In the case of a CHP plant or other thermal load, there may be other active (driven) elements in place of the compressors 110-114.

Coupled to the local area network 104 is a router 10 that is coupled over a public IP network 20 to server 30. The server is connected to the electrical power grid 40. Compressors 110-114 are also connected to the power grid 40. In the embodiment illustrated in Fig. 1, the server and router(s) are not part of the refrigerator or responsive load itself, but are part of a larger control system.

In normal operation of the refrigerator 100, the local controller 102 provides commands to the inputs 130-134 to drive the compressors 110-114 based on the temperature readings provided by the sensors 120-124, in order to keep the temperature of the refrigerator within the acceptable operating temperature range. For instance, if the temperature approaches the maximum temperature from below, when the temperature crosses an upper set point (or its rate of temperature rise crosses a threshold, or some combination of both) the local controller 102 switches on one or more compressors to reduce the temperature. Similarly, if the temperature approaches the minimum temperature from above (e.g. when it drops below a lower set point or its rate of fall crosses a threshold), the local controller 102 switches off one or more compressors to allow the temperature to rise. If the allowable temperature range is exceeded, the contents of the refrigerator 100 may be damaged and have to be destroyed. The upper and lower set points and the maximum and minimum temperatures are local constraint parameters. This ON/OFF cyclical pattern in the operation of the compressors 110-114 is a basic and typical local operation of the responsive load 100, and variations on top of this are possible.

The ON/OFF behaviour can be in response to the pattern of supply and demand of electric power and its cost. For example, the local controller 320 may have timing instructions to preferentially drive the refrigerators during periods of off-peak (low-cost) power. The local controller may be pre-programmed to control the ON/OFF behaviour in a certain pre-determined way on a regular basis, for instance based on recurring electric power cost variation patterns.

Router 10 receives parameters and/or instructions from server 30 to influence the operation of the responsive load 100. In case of a conflict between these parameters or instructions and the pre-programmed parameters in the local controller 102, the former may override the latter. This may be because of the presence of some higher priorities important to the overall operation of the system, or other high-level aims. In an embodiment, this may involve the arrival of an unexpected peak or trough in energy supply or demand, leading to an unexpected price increase or decrease, which is to be advantageously taken advantage of or avoided.

In the above, server 30 may send parameters and/or instructions to router 10 either directly, or via a local intermediary or proxy, such as a routing server, to act on its behalf; the latter possibility may advantageously help to mitigate lost communications between the central server and the routers of the individual assets.

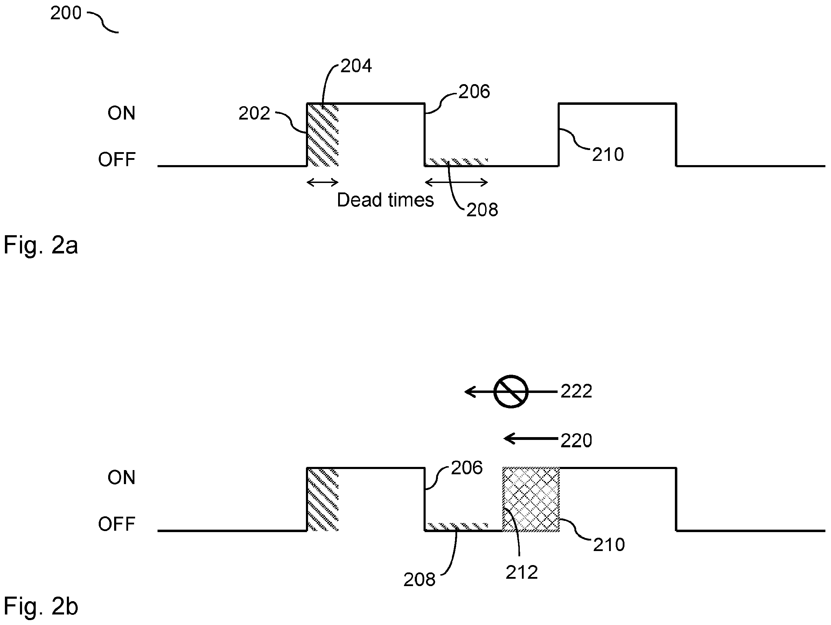

Fig. 2a shows an exemplary representation 200 of the ON/OFF cycle of a compressor (refrigeration load) during typical operation. The compressor may either be in the OFF state or be in the ON state. The duty cycle of the load is the percentage of one period in which the compressor is ON. Its period is the time it takes to complete an on-and-off cycle.

At some point in time, the compressor is switched on 202, and there may immediately follow a period of dead time ("ON dead time") 204 during which it cannot be turned off again. At another point in time, the compressor is switched off 206, and there may immediately follow a period of dead time ("OFF dead time") 208 during which it cannot be turned on again. The compressor may only be turned on again 210 after the dead time 208 has ended.

There may be reasons why it is desirable to advance a turning ON time of the compressor in a cycle. This is illustrated in Fig. 2b. The turning ON time is brought forward 220 from the anticipated or previously determined ON time 210 to the new ON time 212. The ON time cannot be advanced 222 to a point in time before the dead time 208, resulting from the previous turning OFF of the compressor, is over.

In steady-state operation, the duty cycle and period of the control loop of a compressor may be constant. The period can be shortened without affecting long-term temperature control, or the phase can be adjusted. The period can be lengthened, but this may give rise to greater temperature fluctuations. Adjusting the phase may cause a short-term change in temperature, but this is acceptable if the change falls within acceptable limits.

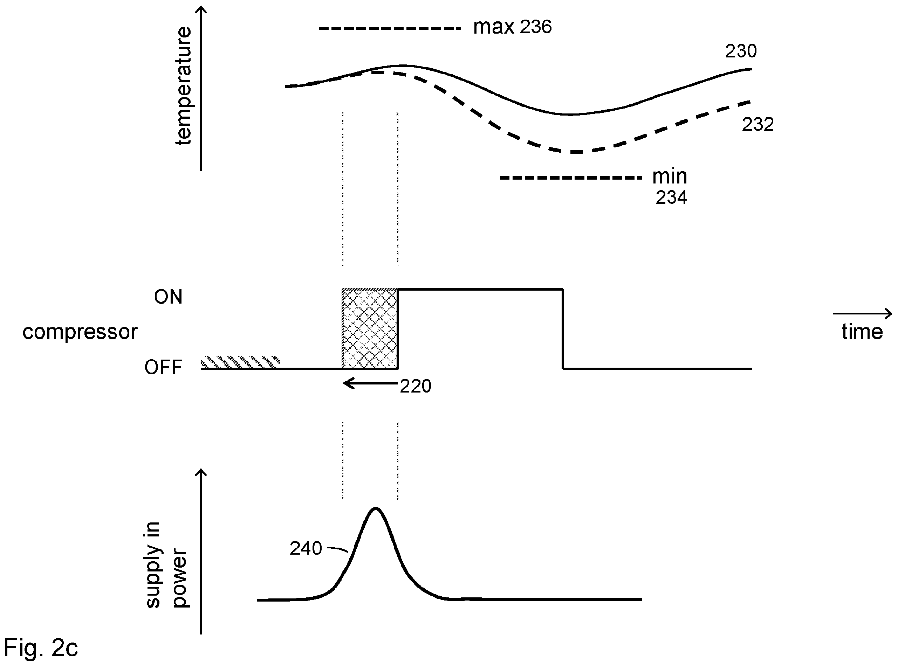

Fig. 2c illustrates an example of bringing forward a turning ON time and its effect. An example of a reason for advancing a turning ON time is the presence of a peak 240 in electric power supply which may result in cheaper power. When the compressor is turned on ahead of its anticipated or previously determined ON time, the temperature of the refrigerator is driven below its normal range using this cheaper power; this allows more room for the temperature to rise naturally in a future period of higher-cost power when the compressor is preferably in an OFF state. Overall, this type of control scheme may significantly reduce the running cost of the refrigerator.

As a result of advancing 220 the turning ON time of the compressor, as illustrated, the temperature variation in time changes from exemplary curve 230 to curve 232. As a direct or indirect consequence of this alteration, the server may or may not need to adjust the future turning ON/OFF times of this compressor or other compressors. The refrigerator may, for example, be allowed to return to a steady state under its normal local closed-loop control without intervention from the server. The system makes sure that the temperature does not go below a pre-determined minimum allowed temperature 234 or above a maximum allowed temperature 236. Another consequence of moving the turning ON (or OFF) time of a compressor is its dead time is also moved. This may also require the future turning ON/OFF times of this or other compressors to be adjusted. For example, a one-off phase adjustment may simply bring forward the ON time and the next OFF time by the same amount.

Fig. 2c serves to illustrate only one possible "event" (a power supply peak) in response to which the ON time of a compressor is altered. More complex situations are possible.

In another example, a turning ON time of a compressor is delayed by the server and controller in response to a first event, e.g. the detection of a peak in demand for electric power.

Along with a phase delay, the ON dead time is also delayed, during which the compressor cannot be turned OFF. This overlap with the ON dead time of another compressor. This may impact of the responsiveness of the refrigerator load in response to a second event, e.g. a sudden increase in power demand, or a sudden decrease in power supply, e.g. due to a technical fault in the power grid, that requires turning off one or more compressors promptly. This demonstrates the advantage of a method to coordinate a plurality of refrigeration loads such that their cycles are not synchronised in terms of their dead times, so that responsiveness and flexibility are enhanced, in particular to the benefit of the power grid operator who is seeking to smooth out peaks and troughs in demand by the deployment of responsive loads.

In effect, when the plurality of compressors or loads are operated such that their ON/OFF cycles are spread out more evenly across time, they can be seen externally as one big compressor with constant power loading, not as a series of compressors being switched on and off on demand. On the other hand the compressors can be completely independent (e.g. belong to independent systems, locations or clients), as long as the electrical power supply to the compressors can be aggregated as a single load. This can be done, for example, by physically connecting the power supplies to a single supply point or by using a server to virtualise and aggregate compressors.

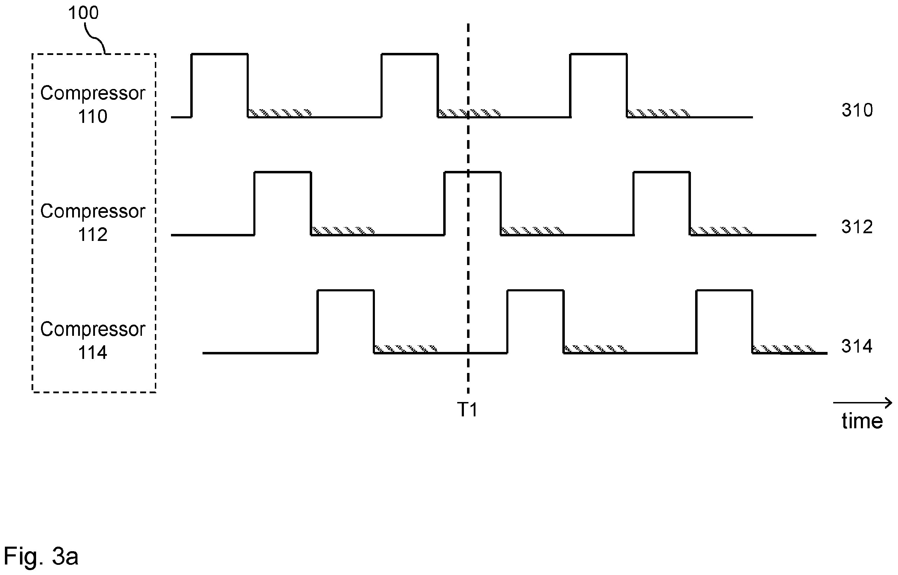

Fig. 3a illustrates the ON/OFF cycles 310-314 of the three refrigeration loads or compressors 110-114 in the refrigerator 100 in Fig. 1, as an example of how they can be managed to reduce, minimise or eliminate the impact of dead times. Situations with a plurality of more than three such refrigeration loads are possible, e.g. 10 to 20 such loads in a string under control of a common server. For clarity of illustration, only the dead times resulting from turning off each compressor ("OFF dead times", shaded) are illustrated; the dead times resulting from turning on each compressor are omitted. Also, the duration of unaltered ON/OFF states and the duration of OFF dead times are shown as being identical among the three compressors, but this is not necessarily the case.

It is noted that in Fig. 3a, the operation ON/OFF cycles 310-314 of the three compressors 110-114 are staggered, in terms of their ON/OFF times and OFF dead times. In other words, an OFF dead time of any compressor does not overlap or coincide with an OFF dead time of any other compressor in the given set that is illustrated. (Note that these compressors may be part of a larger string of compressors under control of a common server, in which there may be compressors having overlapping dead times, but the server will operate to distribute the dead times to reduce or minimize overlapping.) Therefore, in a case where it is desirable to drive the temperature of the refrigerator 100 lower, for example due to an unexpected peak in power supply and lower power cost, the refrigeration load as a whole remains responsive, since at least one compressor is not within an OFF dead time and hence is able to be turned on. In the example illustrated in Fig. 3a, at time T1, even though compressor 110 is in an OFF dead time and hence cannot be turned on, and compressor 112 is already in an ON state, compressor 114 is in an OFF state and not within a dead time, and so it can be turned on to drive the temperature of the refrigerator 100 lower if required.

Altering one or more of the turning OFF times of one or more compressors affects how many compressors are in an ON state, and OFF state or within an unresponsive dead time. Dead times may overlap. The server may further adjust the ON/OFF behaviours of the compressors to allow them as a whole to remain responsive in the future.

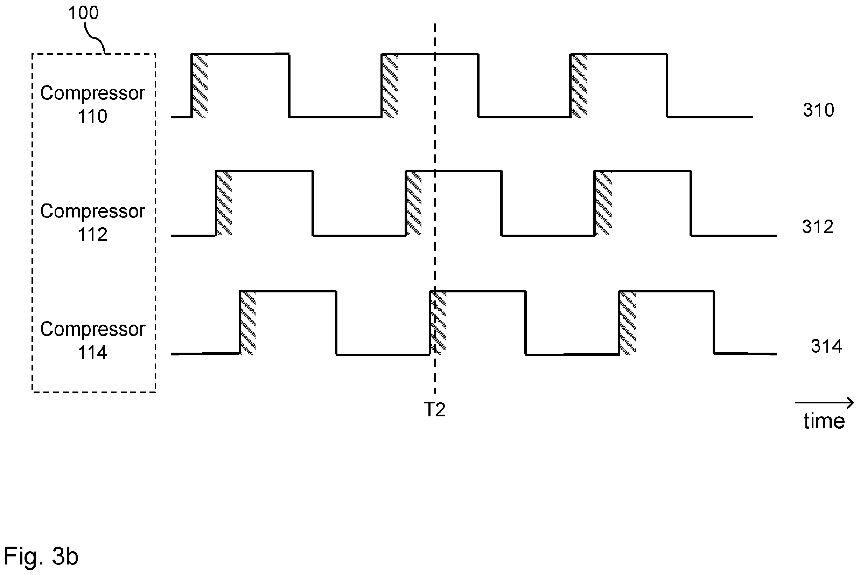

Fig. 3b illustrates a different set of ON/OFF cycles 310-314 of compressors 110-114 in relation to their ON dead times. Again, for clarity of illustration, OFF dead times are omitted, and the duration of unaltered ON/OFF states and the duration of OFF dead times are identical among the three compressors.

As for Fig. 3a which relates to the OFF dead times, the operating cycles illustrated in Fig. 3b are staggered such that an ON dead time of each compressor does not overlap or coincide with an ON dead time of any other compressor in the given set. In other words, in the case where it is permissible for individual refrigerators in the refrigerator bank 100 to warm up (permissible within the constraints of the local control loop), the refrigeration load as a whole remains responsive, as at least one compressor is not within an ON dead time and hence is able to be turned OFF. In the example illustrated in Fig. 3b, at T2, compressors 110 and 112 are in an ON state and out of an ON dead time and are able to be turned OFF responsively.

As mentioned above, this method of enhancing flexibility and responsiveness in a plurality of refrigeration loads within a responsive load such as a refrigerator bank can lead to cost saving in terms of being highly responsive to fluctuating in power in the power grid. A significant advantage of employing coordinated ON/OFF cycles for compressors concerns the structural cost in obtaining a high level of flexibility and responsiveness. Without such coordination (e.g. by a server 30), a greater number of resources may be required to allow the refrigeration load as a whole to be responsive (to a given level) to the fluctuations of power demand and supply. For example, 20 compressors may be collected in a string, to create a responsive load, but using the method currently disclosed to attain a given level of responsiveness, the required number of compressors may be reduced, as one can now be confident there will be a portion of the compressors not locked in a dead time when required to respond to an unexpected event.

The central server 30 issues commands or parameters to the router and local controller(s) to control the ON/OFF cycles of the compressors, based on information it stores. This includes the ON/OFF states and dead times (for example their durations) of individual compressors. It may include readings from sensors 120-124 and other temperature parameters such as the maximum and minimum allowed operating temperatures and the upper and lower set points.

The server may have knowledge of the current periods and duty cycles of the compressors and/or it may be able to control the behaviour of the compressors by monitoring their states (ON, OFF or within a dead time), the temperature readings (such as the rate of change) and other parameters.

For example, the server 30 may tell a compressor to "carry on" in its current ON or OFF state and delay turning OFF or ON respectively, overriding the instructions of the local controller. This may be in response to a recent event in which one or more compressors controlled and monitored by the server has changed its state or behaviour, e.g. because a refrigerator has moved from its steady state because a door has been temporarily opened. Note that if a compressor is made to switch between an ON or OFF state at a lower frequency (longer cycle), the impact of dead times on the responsiveness and flexibility of the system as a whole is reduced, since dead times are typically constant in duration.

Where the server stores or has access to higher-level information relating to the parameters of the compressors, such as the length of their ON/OFF cycle, the server can plan and modify the behaviour of the compressors in advance, rather than making control decisions on a cycle-by-cycle basis.

The server may be aware of an anticipated or previously determined ON time or OFF time for a compressor or may predict such times, or it may simply operate to stagger the cycles of the compressors in the present. For example, if (as illustrated in Figs. 3a and 3b) the compressors have similar periods, the server may simply cause those periods to be staggered - i.e. in the event of one compressor being caused to switch ON or OFF at the same time as another compressor (or when another compressor is within its corresponding dead time), the server may override the local control loop and delay the switching of the second compressor. Alternatively, the server may predict the next transitions of the compressors (knowing their periods and duty cycles) and, in anticipation that a first compressor and a second compressor will have co-incident dead times, it may select one of them to have its switching delayed or advanced. If the server knows the temperatures and temperature limits of a first and a second refrigerator (or air conditioning units or the like), it can select which one to override. It can, for example, select the one that has greater margin for re-adjusting temperature to its steady state condition.

It has been already described that it is advantageous to reduce, minimise or eliminate the impact of compressor dead times. The server may further adjust the ON/OFF behaviours of the compressors to allow them as a whole to remain responsive when there is an unexpected peak or trough in demand or supply, for instance. One way to implement this is to simply stagger the ON/OFF cycles of different compressors to avoid or reduce overlapping of individual dead times.

It is noted that another way to implement this (although it may appear contradictory on the face of it) is "lump" the dead times of two or more compressors together in one period of time. This may bring about the (immediate) onset of multiple overlapping compressor dead times making the system less responsive or non-responsive, but as a result of this, after this set of overlapping dead times are over, these compressors may not have to experience another dead time in a certain subsequent period of time. For example, if it is already known that there is a length of 30 minutes when there is definitely going to be no need for responsiveness, the ON/OFF cycles of compressors can be manipulated, using the current invention, to make them less responsive in the immediate or short term, but more responsive afterwards. This can be advantageous when one knows a specific time at/during which a specific response is needed or desirable. This alternative arrangement also achieves the technical effect of reducing, minimising or mitigating the impact of compressor dead times, though taking effect at a later time instead of immediately.

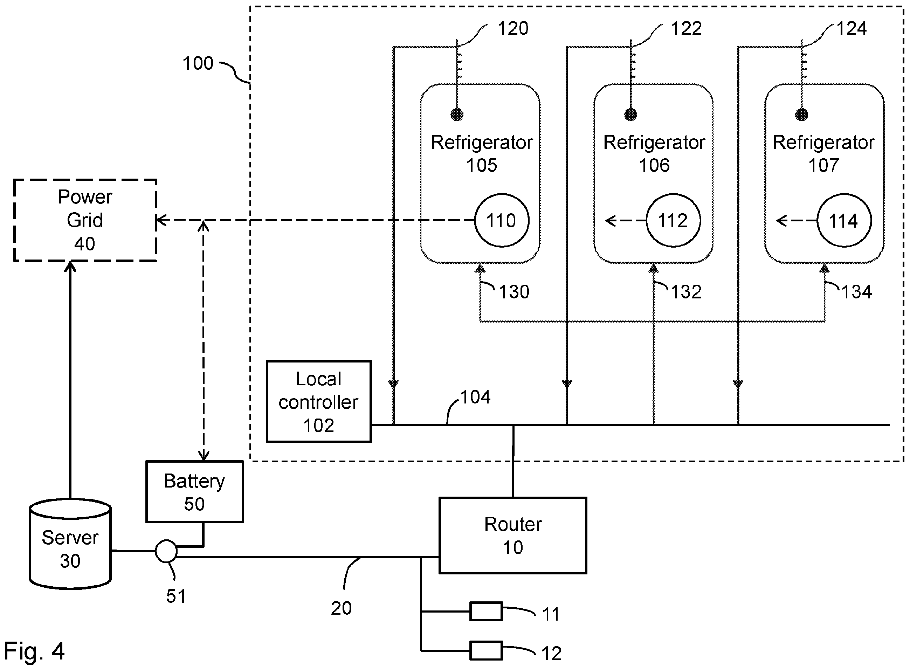

Fig. 4 illustrates an alternative embodiment of the responsive load system. In this embodiment, one or more battery assets 50 are available in the system. The one or more battery assets 50 are connected to the power grid 40 via a switch 51 under control of the server 30. This arrangement allows the possibility that, during the dead times of one or more compressors 110-114, the battery assets 50 can be operated, so as to: selectively provide power to the load during OFF dead times or during multiple overlapping OFF dead times; or draw power from the energy grid supplying the load, to charge the battery, during ON dead times or during multiple overlapping ON dead times. This may be in the form of filling the compressor dead times with short times of battery operation; this would apply when there is visibility of compressor breaks.

The above description of embodiments and examples is given by way of example only. Various aspects and embodiments of the invention can be combined. Various aspects and embodiments can be modified in accordance with other aspects and embodiments. The scope of the invention is not to be limited by details of the embodiments, but is defined in the appended claims.

## Claims

1. A method of providing a responsive load system (100) that may be required to respond to a peak or trough in electric power supply comprising:
providing first and second thermal loads (105, 106, 107, 110, 112, 114), each having an on/off cycle and a dead time in the on/off cycle, wherein each of the first and second thermal loads is not responsive during its respective dead time;
controlling the thermal loads by means of local control loops (102, 104) in response to at least one local thermostat; and
controlling the thermal loads to respond to events in the electric power supply to smooth out peaks and troughs in demand; **characterized by**:
storing, at a server (30), information relating to the dead times for the thermal loads; and
enabling the server to intervene in the operation of the responsive load system (100) and override the local control loop of the first thermal load to coordinate or stagger the on/off cycles of the first and second thermal loads in terms of said information relating to their dead times, and thereby avoid, reduce or mitigate overlapping dead times.

2. The method of claim 1, wherein:
enabling the server to override the local control loop causes the first thermal load to advance or delay the dead time of the first thermal load so that it does not entirely coincide with the dead time of the second thermal load.

3. The method of claim 2, wherein enabling the server to override the local control loop further comprises distributing the dead times of the plurality of thermal loads to reduce or minimise overlapping of said dead times;
and/or
wherein enabling the server to override the local control loop further comprises distributing the dead times of the plurality of thermal loads to stagger operating cycles of the first and second and further thermal loads;
and/or
wherein enabling the server to override the local control loop further comprises distributing the dead times of the plurality of thermal loads such that there is at least one compressor that is not operating in an ON dead time at a given time;
and/or
wherein enabling the server to override the local control loop further comprises distributing the dead times of the plurality of thermal loads such that there is at least one compressor that is not operating in an OFF dead time at a given time.

4. The method of any of claims 2 and 3, wherein enabling the server to override the local control loop comprises: anticipating that the first thermal load and the second thermal load will have overlapping dead times, and selecting the first thermal load to advance or delay its dead time.

5. The method of claim 4, wherein selecting the first thermal load to advance or delay its dead time is based on temperatures and/or temperature limits of the first and/or the second thermal loads and/or of refrigerators associated with the first and/or the second thermal loads;
and/or
wherein selecting the first thermal load to advance or delay its dead time comprises selecting the thermal load with a greater margin for re-adjusting temperature to a steady-state condition.

6. The method of claim 1, wherein the step intervening comprises causing a battery (50) to provide power to the load or to draw power from a source supplying the load selectively during overlapping dead times.

7. The method of any of claims 1 to 6, wherein at least one of the plurality of thermal loads operates in a cycle having a period and wherein the server stores or has access to knowledge of the period of the ON/OFF cycle.

8. The method of claim 7, wherein the at least one of the plurality of thermal loads operates with a duty cycle and the server stores or has access to knowledge of the duty cycle.

9. The method of any of claims 1 to 8, wherein the server is further operable to control the behaviour of one or more of the plurality of thermal loads by monitoring their states (ON, OFF or within a dead time);
and/or
wherein the server is further operable to control the behaviour of one or more of the plurality of thermal loads by monitoring one or more readings from the at least one local thermostat;
and/or
wherein the server is further operable to plan or modify the behaviour of one or more of the plurality of thermal loads in advance;
and/or
wherein the server stores or has access to knowledge of one or more anticipated or previous determined turning-on times or turning-off times associated with the one or more of the plurality of the thermal loads;
and/or
wherein the server is further operable to anticipate or predict one or more turning-on times or turning-off times associated with the one or more of the plurality of the thermal loads.

10. The method of claim 1, further comprising:
enabling the server to intervene in the operation of the responsive load and override the local control loop of a third thermal load so as to advance or delay the dead time of the third thermal load and thereby bring about the onset of multiple overlapping dead times.

11. A responsive load system (100) that may be required to respond to a peak or trough in electric power supply comprising:
a plurality of thermal loads (105, 106, 107, 110, 112, 114), each having an on/off cycle and a dead time in the on/off cycle, wherein each of the plurality of the thermal loads is not responsive during its respective dead time;
means for controlling the plurality of thermal loads by means of local control loops (102, 104) in response to at least one local thermostat;
means for controlling the plurality of thermal loads to respond to events in the electric power supply to smooth out peaks and troughs in demand; **characterized by**:
a server (30) configured to store information relating to the dead times for the plurality of thermal loads; and
means configured to enable the server to intervene in the operation of the thermal loads and override the local control loop of a first of the plurality of thermal loads to coordinate or stagger the on/off cycles of the thermal loads in terms of said information relating to their dead times, and thereby avoid, reduce or mitigate overlapping dead times.

12. The system of claim 11, wherein the means for enabling the server to intervene in the operation of the thermal loads and override the local control loop causes the first thermal load to advance or delay the dead time of the first thermal load so that it does not entirely coincide with the dead time of a second of the plurality of thermal loads.

13. A method of providing a responsive load system (100) comprising:
monitoring, at a server (30), future times t1 and t2 between which a responsive load will be required;
providing first and second thermal loads (105, 106, 107, 110, 112, 114) each having a compressor with an on/off cycle that has a dead time during which the respective compressor is not responsive;
controlling each compressor by means of a local control loop (102, 104) in response to a local thermostat; **characterized by**:
storing, at the server, information relating to the dead times for the first and second thermal loads; and
enabling the server to intervene in the operation of the responsive load and override the local control loop of one or both of the compressors in terms of said information relating to their dead times to advance or delay the on/off cycle(s) and thereby avoid, reduce or mitigate anticipated reduction in responsiveness of the responsive load between times t1 and t2, by:
avoiding or reducing overlapping of the dead times of the first and second thermal loads, or
bringing about the overlapping of the dead times outside the time t1 to t2.

14. The method of claim 13, wherein the step of avoiding, reducing or mitigating comprises switching a battery to provide power to the load or to draw power from a source supplying the load between times t1 to t2.

## Patentansprüche

1. Verfahren zum Bereitstellen eines reaktionsfähigen Lastsystems (100), das erforderlich sein kann, um auf eine Spitze oder Tiefe in der Stromversorgung zu reagieren, das Folgendes beinhaltet:
Bereitstellen einer ersten und zweiten thermischen Last (105, 106, 107, 110, 112, 114) jeweils mit einem Ein/Aus-Zyklus und einer Totzeit in dem Ein/Aus-Zyklus, wobei die erste und zweite thermische Last jeweils während ihrer jeweiligen Totzeit nicht reaktionsfähig sind;
Steuern der thermischen Lasten mittels lokaler Regelschleifen (102, 104) als Reaktion auf mindestens ein lokales Thermostat; und
Steuern der thermischen Lasten, um auf Ereignisse in der Stromversorgung zu reagieren, um Bedarfsspitzen und -tiefen zu glätten; **gekennzeichnet durch**:
Speichern von Informationen bezüglich der Totzeiten für die thermischen Lasten in einem Server (30); und
Ermöglichen, dass der Server in den Betrieb des reaktionsfähigen Lastsystems (100) eingreift und die lokale Regelschleife der ersten thermischen Last außer Kraft setzt, um die Ein/Aus-Zyklen der ersten und zweiten thermischen Last in Bezug auf die genannten Informationen in Bezug auf ihre Totzeiten zu koordinieren oder zu staffeln und **dadurch** überlappende Totzeiten zu vermeiden, zu reduzieren oder abzuschwächen.

2. Verfahren nach Anspruch 1, wobei:
das Ermöglichen, dass der Server die lokale Regelschleife außer Kraft setzt, bewirkt, dass die erste thermische Last die Totzeit der ersten thermischen Last vorverlegt oder verzögert, so dass sie nicht vollständig mit der Totzeit der zweiten thermischen Last übereinstimmt.

3. Verfahren nach Anspruch 2, wobei das Ermöglichen, dass der Server die lokale Regelschleife außer Kraft setzt, ferner das Verteilen der Totzeiten der mehreren thermischen Lasten beinhaltet, um die Überlappung der genannten Totzeiten zu reduzieren oder zu minimieren; und/oder
wobei das Ermöglichen, dass der Server die lokale Regelschleife außer Kraft setzt, ferner das Verteilen der Totzeiten der mehreren thermischen Lasten beinhaltet, um Betriebszyklen der ersten und zweiten und weiteren thermischen Lasten zu staffeln;
und/oder
wobei das Ermöglichen, dass der Server die lokale Regelschleife außer Kraft setzt, ferner das Verteilen der Totzeiten der mehreren thermischen Lasten beinhaltet, so dass es mindestens einen Kompressor gibt, der zu einem gegebenen Zeitpunkt nicht in einer EIN-Totzeit arbeitet;
und/oder
wobei das Ermöglichen, dass der Server die lokale Regelschleife außer Kraft setzt, ferner das Verteilen der Totzeiten der mehreren thermischen Lasten beinhaltet, so dass es mindestens einen Kompressor gibt, der zu einem gegebenen Zeitpunkt nicht in einer AUS-Totzeit arbeitet.

4. Verfahren nach einem der Ansprüche 2 und 3, wobei das Ermöglichen, dass der Server die lokale Regelschleife außer Kraft setzt, Folgendes beinhaltet: Vorhersehen, dass die erste thermische Last und die zweite thermische Last überlappende Totzeiten haben werden, und Auswählen der ersten thermischen Last, um ihre Totzeit vorzuverlegen oder zu verzögern.

5. Verfahren nach Anspruch 4, wobei das Auswählen der ersten thermischen Last zum Vorverlegen oder Verzögern ihrer Totzeit auf Temperaturen und/oder Temperaturgrenzen der ersten und/oder der zweiten thermischen Last und/oder von mit der ersten und/oder der zweiten thermischen Last assoziierten Kühlgeräten basiert;
und/oder
wobei das Auswählen der ersten thermischen Last zum Vorverlegen oder Verzögern ihrer Totzeit das Auswählen der thermischen Last mit einem größeren Spielraum zum Verstellen der Temperatur auf einen Beharrungszustand umfasst.

6. Verfahren nach Anspruch 1, wobei der Schritt des Eingreifens das Bewirken beinhaltet, dass eine Batterie (50) die Last mit Strom versorgt oder Strom von einer Quelle zieht, die die Last selektiv während überlappender Totzeiten versorgt.

7. Verfahren nach einem der Ansprüche 1 bis 6, wobei mindestens eine der mehreren thermischen Lasten in einem Zyklus mit einer Periode arbeitet und wobei der Server die Kenntnis der Periode des EIN/AUS-Zyklus speichert oder Zugang dazu hat.

8. Verfahren nach Anspruch 7, wobei die mindestens eine der mehreren thermischen Lasten mit einem Arbeitszyklus arbeitet und der Server Kenntnis des Arbeitszyklus speichert oder Zugang dazu hat.

9. Verfahren nach einem der Ansprüche 1 bis 8, wobei der Server ferner die Aufgabe hat, das Verhalten einer oder mehrerer aus der Mehrzahl von thermischen Lasten durch Überwachen ihrer Zustände (EIN, AUS oder innerhalb einer Totzeit) zu steuern;
und/oder
wobei der Server ferner die Aufgabe hat, das Verhalten einer oder mehrerer aus der Mehrzahl von thermischen Lasten durch Überwachen eines oder mehrerer Messwerte von dem mindestens einen lokalen Thermostat zu steuern;
und/oder
wobei der Server ferner die Aufgabe hat, das Verhalten von einer oder mehreren aus der Mehrzahl von thermischen Lasten im Voraus zu planen oder zu modifizieren;
und/oder
wobei der Server Kenntnis über eine oder mehrere voraussichtliche oder zuvor ermittelte, mit den ein oder den mehreren aus der Mehrzahl der thermischen Lasten assoziierte Einschaltzeiten oder Ausschaltzeiten speichert oder Zugang dazu hat;
und/oder
wobei der Server ferner die Aufgabe hat, eine oder mehrere mit den ein oder mehreren aus der Mehrzahl der thermischen Lasten assoziierte Einschaltzeiten oder Ausschaltzeiten vorherzusehen oder vorherzusagen.

10. Verfahren nach Anspruch 1, das ferner Folgendes beinhaltet:
Ermöglichen, dass der Server in den Betrieb der reaktionsfähigen Last eingreift und die lokale Regelschleife einer dritten thermischen Last außer Kraft setzt, um die Totzeit der dritten thermischen Last vorzuverlegen oder zu verzögern und dadurch den Beginn mehrerer sich überlappender Totzeiten herbeizuführen.

11. Reaktionsfähiges Lastsystem (100), das erforderlich sein kann, um auf eine Spitze oder Tiefe in der Stromversorgung zu reagieren, das Folgendes umfasst:
mehrere thermische Lasten (105, 106, 107, 110, 112, 114) jeweils mit einem Ein/Aus-Zyklus und einer Totzeit in dem Ein/Aus-Zyklus, wobei jede der mehreren thermischen Lasten während ihrer jeweiligen Totzeit nicht reaktionsfähig ist;
Mittel zum Steuern der mehreren thermischen Lasten mittels lokaler Regelschleifen (102, 104) als Reaktion auf mindestens ein lokales Thermostat;
Mittel zum Steuern der mehreren thermischen Lasten, um auf Ereignisse in der Stromversorgung zu reagieren, um Bedarfsspitzen und -tiefen zu glätten; **gekennzeichnet durch**:
einen Server (30), konfiguriert zum Speichern von Informationen in Bezug auf die Totzeiten für die mehreren thermischen Lasten; und
Mittel, konfiguriert zum Ermöglichen, dass der Server in den Betrieb der thermischen Lasten eingreift und die lokale Regelschleife einer ersten der mehreren thermischen Lasten außer Kraft setzt, um die Ein/Aus-Zyklen der thermischen Lasten hinsichtlich der genannten Informationen in Bezug auf ihre Totzeiten zu koordinieren oder zu staffeln und **dadurch** überlappende Totzeiten zu vermeiden, zu reduzieren oder abzuschwächen.

12. System nach Anspruch 11, wobei das Mittel zum Ermöglichen, dass der Server in den Betrieb der thermischen Lasten eingreift und die lokale Regelschleife außer Kraft setzt, bewirkt, dass die erste thermische Last die Totzeit der ersten thermischen Last vorverlegt oder verzögert, so dass sie nicht vollständig mit der Totzeit einer zweiten der mehreren thermischen Lasten übereinstimmt.

13. Verfahren zum Bereitstellen eines reaktionsfähigen Lastsystems (100), das Folgendes beinhaltet:
Überwachen, an einem Server (30), zukünftiger Zeiten t1 und t2, zwischen denen eine reaktionsfähige Last erforderlich sein wird;
Bereitstellen einer ersten und zweiten thermischen Last (105, 106, 107, 110, 112, 114) jeweils mit einem Kompressor mit einem Ein/Aus-Zyklus, der eine Totzeit hat, während der der jeweilige Kompressor nicht reaktionsfähig ist;
Steuern jedes Kompressors mittels einer lokalen Regelschleife (102, 104) als Reaktion auf ein lokales Thermostat; **gekennzeichnet durch**:
Speichern von Informationen in Bezug auf die Totzeiten für die erste und zweite thermische Last in dem Server; und
Ermöglichen, dass der Server in den Betrieb der reaktionsfähigen Last eingreift und die lokale Regelschleife eines oder beider Kompressoren hinsichtlich der genannten Informationen in Bezug auf ihre Totzeiten außer Kraft setzt, um die ein oder mehreren Ein/Aus-Zyklen vorzuverlegen oder zu verzögern und **dadurch** die voraussichtliche Verringerung der Reaktionsfähigkeit der reaktionsfähigen Last zwischen den Zeiten t1 und t2 zu vermeiden, zu reduzieren oder abzuschwächen **durch**:
Vermeiden oder Reduzieren von Überlappung der Totzeiten der ersten und zweiten thermischen Last, oder
Herbeiführen der Überlappung der Totzeiten außerhalb der Zeit t1 bis t2.

14. Verfahren nach Anspruch 13, wobei der Schritt des Vermeidens, Reduzierens oder Abschwächens das Umschalten einer Batterie umfasst, um die Last mit Strom zu versorgen oder um Strom von einer Quelle zu ziehen, die die Last zwischen den Zeiten t1 bis t2 versorgt.

## Revendications

1. Un procédé de fourniture d'un système à charges réactives (100) qui peut être requis pour répondre à une crête ou un creux dans une alimentation en courant électrique comprenant :
la fourniture d'une première et d'une deuxième charges thermiques (105, 106, 107, 110, 112, 114), chacune d'elles possédant un cycle marche/arrêt et un temps mort dans le cycle marche/arrêt, où chaque charge thermique parmi la première et la deuxième charges thermiques n'est pas réactive au cours de son temps mort respectif,
la commande des charges thermiques au moyen de boucles de commande locales (102, 104) en réponse à au moins un thermostat local, et
la commande des charges thermiques de façon à répondre à des événements dans l'alimentation en courant électrique de façon à lisser des crêtes et des creux à la demande, **caractérisé par** :
la conservation en mémoire, au niveau d'un serveur (30), d'informations relatives aux temps morts pour les charges thermiques, et
l'opération consistant à permettre au serveur d'intervenir dans le fonctionnement du système à charges réactives (100) et d'annuler la boucle de commande locale de la première charge thermique de façon à coordonner ou échelonner les cycles marche/arrêt des première et deuxième charges thermiques en termes desdites informations relatives à leurs temps morts, et ainsi éviter, réduire ou atténuer des temps morts en chevauchement.

2. Le procédé selon la Revendication 1, où :
l'opération consistant à permettre au serveur d'annuler la boucle de commande locale amène la première charge thermique à avancer ou retarder le temps mort de la première charge thermique de sorte qu'elle ne coïncide pas entièrement avec le temps mort de la deuxième charge thermique.

3. Le procédé selon la Revendication 2, où l'opération consistant à permettre au serveur d'annuler la boucle de commande locale comprend en outre la distribution des temps morts de la pluralité de charges thermiques de façon à réduire ou minimiser le chevauchement desdits temps morts,
et/ou
où l'opération consistant à permettre au serveur d'annuler la boucle de commande locale comprend en outre la distribution des temps morts de la pluralité de charges thermiques de façon à échelonner des cycles de fonctionnement des première, deuxième et charges thermiques suivantes,
et/ou
où l'opération consistant à permettre au serveur d'annuler la boucle de commande locale comprend en outre la distribution des temps morts de la pluralité de charges thermiques de sorte qu'il existe au moins un compresseur qui ne fonctionne pas dans un temps mort en marche à un instant donné,
et/ou
où l'opération consistant à permettre au serveur d'annuler la boucle de commande locale comprend en outre la distribution des temps morts de la pluralité de charges thermiques de sorte qu'il existe au moins un compresseur qui ne fonctionne pas dans un temps mort à l'arrêt à un instant donné.

4. Le procédé selon l'une quelconque des Revendications 2 et 3, où l'opération consistant à permettre au serveur d'annuler la boucle de commande locale comprend : l'anticipation que la première charge thermique et la deuxième charge thermique présenteront des temps morts en chevauchement, et la sélection de la première charge thermique de façon à avancer ou retarder son temps mort.

5. Le procédé selon la Revendication 4, où la sélection de la première charge thermique de façon à avancer ou retarder son temps mort est basée sur des températures et/ou des limites de température de la première et/ou de la deuxième charges thermiques et/ou de réfrigérateurs associés à la première et/ou la deuxième charges thermiques,
et/ou
où la sélection de la première charge thermique de façon à avancer ou retarder son temps mort comprend la sélection de la charge thermique avec une marge plus grande pour le réajustement de la température sur une condition d'état stable.

6. Le procédé selon la Revendication 1, où l'opération d'intervention comprend l'opération consistant à amener une batterie (50) à fournir du courant à la charge ou à tirer du courant à partir d'une source fournissant la charge de manière sélective au cours de temps morts en chevauchement.

7. Le procédé selon l'une quelconque des Revendications 1 à 6, où au moins une charge thermique de la pluralité de charges thermiques fonctionne dans un cycle possédant une période et où le serveur conserve en mémoire ou a accès à des connaissances de la période du cycle marche/arrêt.

8. Le procédé selon la Revendication 7, où la au moins une charge thermique de la pluralité de charges thermiques fonctionne avec un cycle de service et le serveur conserve en mémoire ou a accès à des connaissances du cycle de service.

9. Le procédé selon l'une quelconque des Revendications 1 à 8, où le serveur est conçu en outre de façon à commander le comportement d'une ou de plusieurs charges thermiques de la pluralité de charges thermiques par la surveillance de leurs états (marche, arrêt ou à l'intérieur d'un temps mort),
et/ou
où le serveur est conçu en outre de façon à commander le comportement d'une ou de plusieurs charges thermiques de la pluralité de charges thermiques par la surveillance d'un ou de plusieurs relevés provenant du au moins un thermostat local,
et/ou
où le serveur est conçu en outre de façon à planifier ou modifier le comportement d'une ou de plusieurs charges thermiques de la pluralité de charges thermiques à l'avance,
et/ou
où le serveur conserve en mémoire ou a accès à des connaissances d'une ou de plusieurs heures de mises en marche ou heures de mises à l'arrêt déterminées antérieures ou anticipées associées aux une ou plusieurs charges thermiques de la pluralité des charges thermiques,
et/ou
où le serveur est conçu en outre de façon à anticiper ou prédire une ou plusieurs heures de mises en marche ou heures de mises à l'arrêt associées aux une ou plusieurs charges thermiques de la pluralité des charges thermiques.

10. Le procédé selon la Revendication 1, comprenant en outre :
l'opération consistant à permettre au serveur d'intervenir dans le fonctionnement de la charge réactive et d'annuler la boucle de commande locale d'une troisième charge thermique de façon à avancer ou retarder le temps mort de la troisième charge thermique et ainsi provoquer l'apparition d'une pluralité de temps morts en chevauchement.

11. Un système à charges réactives (100) qui peut être requis pour répondre à une crête ou un creux dans une alimentation en courant électrique comprenant :
une pluralité de charges thermiques (105, 106, 107, 110, 112, 114), chacune d'elles possédant un cycle marche/arrêt et un temps mort dans le cycle marche/arrêt, où chaque charge thermique de la pluralité des charges thermiques n'est pas réactive au cours de son temps mort respectif,
un moyen de commande de la pluralité de charges thermiques au moyen de boucles de commande locales (102, 104) en réponse à au moins un thermostat local,
un moyen de commande de la pluralité de charges thermiques de façon à répondre à des événements dans l'alimentation en courant électrique de façon à lisser des crêtes et des creux à la demande, **caractérisé par** :
un serveur (30) configuré de façon à conserver en mémoire des informations relatives aux temps morts pour la pluralité de charges thermiques, et
un moyen configuré de façon à permettre au serveur d'intervenir dans le fonctionnement des charges thermiques et d'annuler la boucle de commande locale d'une première charge thermique de la pluralité de charges thermiques de façon à coordonner ou échelonner les cycles marche/arrêt des charges thermiques en termes desdites informations relatives à leurs temps morts, et ainsi éviter, réduire ou atténuer des temps morts en chevauchement.

12. Le système selon la Revendication 11, où le moyen destiné à permettre au serveur d'intervenir dans le fonctionnement des charges thermiques et d'annuler la boucle de commande locale amène la première charge thermique à avancer ou retarder le temps mort de la première charge thermique de sorte qu'elle ne coïncide pas entièrement avec le temps mort d'une deuxième charge thermique de la pluralité de charges thermiques.

13. Un procédé de fourniture d'un système à charges réactives (100) comprenant :
la surveillance, au niveau d'un serveur (30), d'instants futurs t1 et t2 entre lesquelles une charge réactive sera requise,
la fourniture d'une première et d'une deuxième charges thermiques (105, 106, 107, 110, 112, 114), chacune d'elles possédant un compresseur avec un cycle marche/arrêt qui possède un temps mort au cours duquel le compresseur respectif n'est pas réactive,
la commande de chaque compresseur au moyen d'une boucle de commande locale (102, 104) en réponse à un thermostat local, **caractérisé par** :
la conservation en mémoire, au niveau du serveur, d'informations relatives aux temps morts pour les première et deuxième charges thermiques, et
l'opération consistant à permettre au serveur d'intervenir dans le fonctionnement de la charge réactive et d'annuler la boucle de commande locale d'un compresseur ou des deux compresseurs en termes desdites informations relatives à leurs temps morts de façon à avancer ou retarder le(s) cycle(s) marche/arrêt et ainsi éviter, réduire ou atténuer une réduction anticipée de la réactivité de la charge réactive entre les instants t1 et t2, par :
l'évitement ou la réduction du chevauchement des temps morts des première et deuxième charges thermiques, ou
la provocation du chevauchement des temps morts en dehors des instants t1 à t2.

14. Le procédé selon la Revendication 13, où l'opération d'évitement, de réduction ou d'atténuation comprend la commutation d'une batterie de façon à fournir du courant à la charge ou de tirer du courant à partir d'une source fournissant la charge entre les instants t1 à t2.
